# Europäisches Patentamt

# European Patent Office

# Office européen des brevets

(19)

(11) Veröffentlichungsnummer: **0 102 508**
**B1**

(12) ## EUROPÄISCHE PATENTSCHRIFT

(45) Veröffentlichungstag der Patentschrift:
23.04.86

(51) Int. Cl.⁴: **C 08 G 65/30**

(21) Anmeldenummer: **83107365.5**

(22) Anmeldetag: **27.07.83**

(54) Verfahren zur Reinigung von rohen Polyether-Polyolen.

(30) Priorität: **05.08.82 DE 3229216**

(43) Veröffentlichungstag der Anmeldung:
**14.03.84 Patentblatt 84/11**

(45) Bekanntmachung des Hinweises auf die Patenterteilung:
**23.04.86 Patentblatt 86/17**

(84) Benannte Vertragsstaaten:
**BE DE FR GB IT NL SE**

(56) Entgegenhaltungen:
**EP - A - 0 059 368**
**DD - A - 142 348**
**DE - B - 1 495 729**
**US - A - 4 137 398**
**US - A - 4 306 943**

**Patent Abstracts of Japan Band 3, Nr. 133, 7. November 1979 Seite 133 C 63**

(73) Patentinhaber: **BASF Aktiengesellschaft,**
**Carl-Bosch-Strasse 38, D-6700 Ludwigshafen (DE)**

(72) Erfinder: **Straehle, Wolfgang, Dr., Hirschgasse 20,**
**D-6900 Heidelberg (DE)**
Erfinder: **Denni, Raymond, Dr., Erlenweg 19,**
**D-6706 Wachenheim (DE)**
Erfinder: **Marx, Matthias, Dr., Seebacher Strasse 49,**
**D-6702 Bad Duerkheim (DE)**

**Beschreibung**

Polyether-polyole werden üblicherweise hergestellt durch anionische Polymerisation von Alkylenoxiden. Hierbei werden die Alkylenoxide in Gegenwart von basischen Katalysatoren, wie z.B. Alkalimetallhydroxiden oder -alkoholaten, an ein Startermolekül, das mindestens zwei reaktionsfähige Wasserstoffatome gebunden enthält, addiert. Man erhält Polyether-polyole mit freien Hydroxylgruppen, von denen ein Teil aufgrund des alkalischen Reaktionsmediums endständige Alkoholatgruppen trägt. Für die weitere Verwendung der Polyether-polyole, insbesondere zur Herstellung von Polyurethanen, müssen die Alkoholatreste in freie Hydroxylgruppen übergeführt werden, und zwar so, dass die Polyether-polyole praktisch keine anorganischen Bestandteile mehr enthalten, die sich durch Veraschung oder Puffereffekte nachweisen lassen.

Die alkalihaltigen Polyether-polyole werden hierzu im allgemeinen mit anorganischen oder organischen Säuren neutralisiert, wobei sich Emulsionen aus wässrigen Salzlösungen und Polyether-polyolen bilden. Anschliessend wird das Wasser der Emulsionen unter fortlaufender Temperatursteigerung abdestilliert. Die verbleibenden, im Polyether-polyol ausfallenden Salze werden mechanisch abgetrennt.

Verwendet man zur Neutralisation der Polyether-polyole anorganische Säuren wie Schwefelsäure, Phosphorsäure, Salzsäure, sauer reagierende Salze, wie Kaliumhydrogenphosphat, oder organische Säuren, wie Zitronensäure, Tartronsäure u.a. so muss genau bis zum Äquivalenzpunkt neutralisiert werden, um auf der einen Seite ein Minimum an basischen Restalkalisalzen oder auf der anderen Seite ein Minimum an Säureüberschuss zu erhalten (US-A-3 425 960). Ferner fällt das Alkalisalz häufig in so feinen Kristallen aus, dass die Filtration, trotz Verwendung von Filterhilfsmitteln Schwierigkeiten bereitet. Daneben können, insbesondere bei der Verwendung von Schwefelsäure, Verfärbungen der Polyether-polyole auftreten.

Die Schwierigkeit, den Äquivalenzpunkt bei der Neutralisation exakt einstellen zu müssen, kann nach Angaben der US-A-3 016 404 durch die Verwendung einer flüchtigen Säure, wie Chlorwasserstoff, beseitigt werden. Hierbei wird der Chlorwasserstoffüberschuss als Gas abdestilliert. Das Verfahren besitzt den Nachteil, dass der Chlorwasserstoff stark korrodierend auf das Gefässmaterial einwirkt und das überschüssige Gas zur Vermeidung von Luftverschmutzungen mit Hilfe von kostspieligen Absorptions- und Waschtürmen abgetrennt oder vernichtet werden muss.

Zufriedenstellende Ergebnisse werden erzielt, wenn man gemäss DE-C-2 208 614 (US-A-3 833 669) Alkylenoxide mit basischen Katalysatoren polymerisiert und danach die Katalysatoren in Gegenwart von basischen Magnesiumsalzen mit Kohlendioxid ausfällt.

Apparativ und im Einsatz von Hilfsstoffen aufwendig sind auch Verfahren, die zur Neutralisation der Reaktionslösung Ionenaustauscher verwenden. Hierbei muss in Gegenwart von Verdünnungsmitteln gearbeitet werden, die anschliessend abgetrennt und regeneriert werden müssen. Um hohe Produktverluste zu vermeiden, müssen die Ionenaustauscher vor der Regenerierung völlig produktfrei gewaschen werden.

Nach Angaben der GB-A-877 269 werden zur Neutralisation der Polyether-polyole mit Säuren behandelte Erden verwendet. Nachteilig bei diesem Verfahren ist die Handhabung der Feststoffe, die insbesondere bei grösseren Reaktionsansätzen Schwierigkeiten bereiten kann, da bis ca. 4 Gew.-% solcher Erden, bezogen auf das Polyether-polyol-Gewicht, zur Neutralisation erforderlich sind. Um ein klares Filtrat zu erhalten, muss zum Abfiltrieren derartiger Erden ein sehr dichtes Filtermaterial verwendet werden, was wiederum lange Filtrationszeiten zur Folge hat.

Zur Reinigung der Polyether-polyole wird die Reaktionsmischung gemäss US-A-3 582 491 mit einem wasserunlöslichen Lösungsmittel, wie z.B. Toluol od. Hexan, verdünnt und die erhaltene Lösung mit Wasser ausgewaschen. Das Verfahren ist jedoch apparativ aufwendig und durch die anschliessende Lösungsmittelregenerierung kostenintensiv. Eine andere Schwierigkeit bereitet die leichte Emulsionsbildung.

Nach Angaben der EP-A-944 werden die rohen Polyether-polyole mit Wasser, einem Adsorptionsmittel und einem Lösungsmittel versetzt und die Reaktionsmischung anschliessend filtriert. Die Mitverwendung eines Adsorptionsmittels ist im wesentlichen unproblematisch, hat aber den Nachteil, dass die Polyether-polyolausbeute in Abhängigkeit von der eingesetzten Adsorptionsmittelmenge reduziert wird, beispielsweise um 2 bis 5%. Ausserdem muss der pyrophore Filterrückstand entsorgt werden. Diese Verfahrensstufe bildet nicht nur ein Sicherheitsrisiko, sondern sie ist ebenso technisch aufwendig und wenig umweltfreundlich wie die Lösungsmittelrückgewinnung.

Die Reinigung von Polyether-polyolen wird auch in der US-A-4 306 943 beschrieben. Nach diesem Verfahren wird die Reaktionsmischung mit einer Mineralsäure mit einer Dissoziationskonstante grösser als $10^{-3}$ bei 25°C neutralisiert und mit dem Hydrat eines Metallsalzes der eingesetzten Säure versetzt, danach wird das Wasser abdestilliert und die Reaktionsmischung filtriert. Nachteilig ist insbesondere, dass die Metallsalzhydrate in einem separaten Verfahrensschritt hergestellt werden müssen, durch den Zusatz der Filterrückstand vergrössert und die Filtrationszeit verlängert wird.

Aus den genannten Gründen war es bisher in vielen Fällen ohne langwierige Nachbehandlung der Produkte nicht möglich, Polyether-polyole in hohen Raum-Zeit-Ausbeuten nach üblichen Verfahren technisch herzustellen, die gleichzeitig nahezu aschefrei, farblos und geruchlos sind.

Die vorliegende Erfindung erlaubt diese Nachteile zu vermeiden und in einem technisch einfachen Verfahren durch Fällung der basischen Polymerisationskatalysatoren mit ortho-Phosphorsäure und Behandlung der Reaktionsmischung mit Adsorptionsmitteln und gegebenenfalls Filterhilfsmitteln exakt reproduzierbare Polyether-polyole herzustellen, bei denen die Säurezahl verbessert, der Aschgehalt vermindert und die Filtrationsgeschwindigkeit in Abhängigkeit vom hergestellten Polyether-polyol teilweise verbessert oder zumindest nicht wesentlich verschlechtert wurde.

Die Erfindung betrifft somit ein Verfahren zur Reinigung von rohen Polyether-polyolen, die durch anionische Polymerisation von Alkylenoxiden in Gegenwart von basischen Katalysatoren und anschliessender Neutralisation der Katalysatoren mit Mineralsäure erhalten werden und das dadurch gekennzeichnet ist, dass man

a) das rohe Polyether-polyol mit 0,2 bis 1,5 Gew.-Teilen Wasser pro 100 Gew.-Teilen rohes Polyether-polyol und 0,3 bis 1,1 Molen ortho-Phosphorsäure pro Mol basischen Katalysator mischt,

b) der Reaktionsmischung danach 0,05 bis 0,5 Gew.-Teile eines Adsorptionsmittels pro 100 Gew.-Teilen rohes Polyether-polyol einverleibt,

c) die gebildeten Salze und die einverleibten festen Zusatzstoffe abtrennt und

d) das Wasser aus dem Polyether-polyol abdestilliert.

Es war überraschend und keineswegs vorhersehbar, dass sich Polyether-polyole nach dem erfindungsgemässen Verfahren auf einfachste Weise schnell und zuverlässig reinigen lassen, da aus der US-A-3 016 404 bekannt war, das sirupöse Phosphorsäure zur Neutralisation von rohen Alkylenoxidpolietherolen absolut ungeeignet ist. Erst bei Verwendung von Phosphorsäure-Kaliumionen-Äquivalenzverhältnissen von mindestens 3,0 konnten Kaliumionen vollständig ausgefällt werden. Dies führte jedoch zu Polyoxyalkylen-polyolen mit hohen Säurezahlen.

Durch das kombinierte Neutralisations-/Adsorptionsverfahren, bei dem eine geringe Menge ortho-Phosphorsäure mit einer geringen Menge eines Adsorptionsmittels kombiniert wird, konnten deutlich bessere analytische Ergebnisse erhalten werden als wenn die Mineralsäure oder das Adsorptionsmittel getrennt eingesetzt werden. Entscheidend für die Güte der Reinigung ist ausserdem der Wassergehalt des rohen Polyether-polyols.

Nach dem erfindungsgemässen Verfahren werden somit spezifikationsgerechte Polyether-polyole in grösseren Ausbeuten, bei verminderter Menge an Filterrückstand und in akzeptablen Filtrationszeiten im Vergleich zu konventionellen Adsorptionsverfahren erhalten.

Die Herstellung der Polyether-polyole erfolgt nach den üblichen bekannten Arbeitstechniken. Ein oder mehrere gegebenenfalls substituierte Alkylenoxide mit 2 bis 4 Kohlenstoffatomen im Alkylenrest werden an ein Startermolekül, das mindestens 2, vorzugsweise 2 bis 8 und insbesondere 2 bis 4 aktive Wasserstoffatome gebunden enthält, in Gegenwart eines basischen Katalysators angelagert.

Geeignete Alkylenoxide sind beispielsweise 2,3-Epoxi-propanol-1, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin. Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin, 4,4'-, 2,4'- und 2,2'-Diamino-diphenylmethan und Mischungen aus Diamino-diphenylmethanen und Polyphenyl-polymethylen-polyaminen.

Als Startermoleküle kommen ferner in Betracht Alkanolamine, wie Ethanolamin, Diethanolamin, N-Methyl- und N-Ethyl-alkanolamine, wie N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und 1,3, Diethylenglykol, Dipropylenglykol, Butylenglykol-1,4, Hexamethylenglykol-1,6, Glycerin, Trimethylol-propan, Pentaerythrit, Sorbit und Saccharose. Die Startermoleküle können einzeln oder als Mischungen eingesetzt werden.

Gebräuchliche Katalysatoren sind Alkalialkoxide mit 1 bis 4 Kohlenstoffatomen im Alkylrest, wie Natriummethylat, Natrium- und Kaliummethylat, Kaliumisopropylat und Natriumbutylat und vorzugsweise Alkalihydroxide, wie Natriumhydroxid und vorzugsweise Kaliumhydroxid. Der Katalysator wird üblicherweise in einer Menge von 0,02 bis 3 Gew.-%, vorzugsweise von 0,2 bis 1,0 Gew.-%, bezogen auf das Gesamtgewicht der Ausgangskomponenten, verwendet.

Die Neutralisation der basischen Katalysatoren wird erfindungsgemäss in Gegenwart einer definierten Wassermenge mit ortho-Phosphorsäure durchgeführt. Geeignet hierfür sind sowohl wasserfreie als auch handelsübliche wässrige ortho-Phosphorsäuren, sofern die angegebenen Mengenverhältnisse eingehalten werden. Vorzugsweise verwendet wird sirupöse (85%ige) ortho-Phosphorsäure.

Pro 100 Gew.-Teile des rohen Polyether-polyols werden 0,2 bis 1,5 Gew.-Teile, vorzugsweise 0,4 bis 1,2 Gew.-Teile und insbesondere 0,5 bis 1,0 Gew.-Teile Wasser und pro Mol basischer Katalysator 0,3 bis 1,1 Mol, vorzugsweise 0,6 bis ein Mol ortho-Phosphorsäure verwendet, so dass der pH-Wert der Reaktionsmischung 12 bis 5, vorzugsweise 9 bis 6 beträgt.

Als Adsorptionsmittel werden vorzugsweise natürliche und/oder synthetische Silikate von Erdalkalimetallen und/oder Aluminium verwendet. Beispielhaft genannt seien Aluminiumsilikate, wie Bentonite, Calciumsilikate, wie Montmorillonit und Magnesiumsilikate, wie Talk.

Besonders bewährt hat sich und daher insbesondere verwendet wird ein künstliches Magnesiumsilikat mit der vermutlichen Formel $MgO(SiO_2)_{2,7}$. Die Adsorptionsmittel werden in Mengen von 0,05 bis 0,5 Gew.-Teilen, vorzugsweise von 0,1 bis 0,2 Gew.-Teilen pro 100 Gew.-Teilen rohes Polyether-polyol eingesetzt.

Die durch die Neutralisation gebildeten Salze und die der Reaktionsmischung einverleibten Adsorptionsmittel können leicht durch Sedimentation, Zentrifugieren und vorzugsweise durch Filtration abgetrennt werden. Hierbei hat es sich als zweckmässig erwiesen, neben den Adsorptionsmitteln zur Filtration zusätzlich Filterhilfsmittel, wie z.B. Perlite, Kieselgure und Diatomeen mitzuverwenden. Sofern Filterhilfsmittel Anwendung finden, werden diese üblicherweise in Mengen von von 0,05 bis 1,0 Gew.-Teilen, vorzugsweise von 0,1 bis 0,2 Gew.-Teilen pro 100 Gew.-Teilen rohes Polyether-polyol eingesetzt.

Im einzelnen werden die Polyether-polyole zweckmässigerweise so hergestellt, dass man in eine Mischung aus Startermolekül und basischem Katalysator bei Temperaturen von 60 bis 150°C, vorzugsweise 90 bis 130°C das gegebenenfalls mit einem unter den Reaktionsbedingungen inerten Gas, beispielsweise Stickstoff, verdünnte Alkylenoxid in dem Masse, wie es abreagiert, beispielsweise in 2 bis 12 Stunden, vorzugsweise 6 bis 10 Stunden, bei Atmosphärendruck oder gegebenenfalls unter erhöhtem Druck bei 1 bis 20 bar, vorzugsweise 1 bis 8 bar, einträgt.

Nach Beendigung der Polymerisation wird das überschüssige Alkylenoxid bei Temperaturen von 90 bis 150°C unter vermindertem Druck, beispielsweise bei 5 bis 50 mbar, abdestilliert und dem rohen Polyether-polyol bei einer Temperatur von 50 bis 140°C, vorzugsweise von 70 bis 120°C und insbesondere bei 85 bis 100°C bei Atmosphärendruck oder gegebenenfalls unter einem erhöhten Druck bis zu 6 bar, das Wasser und die ortho-Phosphorsäure hinzugefügt. Nach der bevorzugten Verfahrensweise wird hierbei dem rohen Polyether-polyol zunächst das Wasser und danach die Phosphorsäure einverleibt. Es ist jedoch auch möglich, das Wasser und die Phosphorsäure gleichzeitig oder zunächst die Phosphorsäure und dann das Wasser zu dem rohen Polyether-polyol zu geben. Die Reaktionsmischung wird in den genannten Temperaturbereichen 0,1 bis 4 Stunden, vorzugsweise 0,5 bis 1 Stunde, gerührt und anschliessend das Adsorptionsmittel unter Rühren einverleibt, wobei es sich als vorteilhaft erwiesen hat nach der Adsorptionsmittelzugabe nochmals 0,5 bis 5 Stunden, vorzugsweise 1 bis 2 Stunden zu rühren. Das Reaktionsgefäss wird nun gegebenenfalls entspannt, der Reaktionsmischung zweckmässigerweise ein Filterhilfsmittel hinzugefügt, gegebenenfalls nochmals 0,1 bis 2 Stunden gerührt und bei Temperaturen von 50 bis 140°C, vorzugsweise 70 bis 120°C, drucklos oder vorzugsweise mit einem Druck von 0,5 bis 6 bar die gebildeten Salze und die festen Zusatzstoffe, wie das Adsorptions- und gegebenenfalls Filterhilfsmittel, mit Hilfe eines Glasfilters, Membranfilters oder vorzugsweise Metallfilters mit einer Maschenweite von 40 bis 100 μm abfiltriert. Zur Erzielung einer hohen Filtrationsgeschwindigkeit und von guten analytischen Daten ist wesentlich, dass der Wassergehalt der Reaktionsmischung während der Neutralisation und zweckmässigerweise auch während der Filtration im wesentlichen unverändert erhalten bleibt. Aus dem als Filtrat anfallenden Polyether-polyol wird abschliessend bei einer Temperatur von 90 bis 130°C unter einem vermindertem Druck von 5 bis 50 mbar das Wasser abdestilliert.

Die nach dem erfindungsgemässen Verfahren gereinigten Polyether-polyole werden vorzugsweise zur Herstellung von Polyurethankunststoffen verwendet. Die Produkte besitzen Funktionalitäten von mindestens 2, Hydroxylzahlen von 15 bis 1000 und Viskositäten von 100 bis 350.000 m · Pas bei 25°C.

*Beispiele*

Herstellung der Polyether-polyole

*Polyether-polyol 1:*

In einem 10 *l* Rührautoklaven wurden 92,09 g Glycerin vorgelegt, die Vorlage nach Zugabe von 21,3 g 85gew.%iger wässriger Kalilauge 2 Stunden lang auf 100°C erhitzt und hierbei unter vermindertem Druck (10 mbar) das als Lösungsmittel verwendete und bei der Alkoholatbildung entstehende Wasser abdestilliert. Danach wurden bei 105°C unter Rühren 5100 g 1,2-Propylenoxid mit einer solchen Geschwindigkeit hinzugefügt, das der Gesamtdruck im Rührautoklav 7 bar nicht überschritt. nach beendeter Propoxilierung wurde das nicht umgesetzte 1,2-Propylenoxid unter vermindertem Druck (10 mbar) abdestilliert und danach unter den obengenannten Reaktionsbedingungen mit 1370 g Ethylenoxid ethoxiliert. Danach wurde das nicht umgesetzte Ethylenoxid wiederum unter vermindertem Druck (10 mbar) abdestilliert.

*Polyether-polyol 2:*

Man verfuhr analog der Herstellung von Polyetherpolyol 1, verwendete die Aufbaukomponenten jedoch in folgenden Mengen:

138,1 g   Glycerin

44,1 g   85gew.%ige wässrige Kalilauge

6180    g   1,2-Propylenoxid

1170    g   Ethylenoxid

*Polyether-polyol 3:*

In einem 5 *l* Rührautoklaven wurden 92 g Glycerin vorgelegt, die Vorlage nach Zugabe von 10,4 g 85 gew.%iger wässriger Kalilauge 2 Stunden lang auf 105°C erhitzt und hierbei unter einem verminderten Druck (10 mbar) das eingesetzte und entstandene Wasser abdestilliert. Danach wurde bei 105°C unter Rühren eine Mischung aus 625 g Ethylenoxid und 3280 g 1,2-Propylenoxid mit einer solchen Geschwindigkeit hinzugefügt, dass der Gesamtdruck im Rührautoklav 7 bar nicht überschritt. Nach einer Nachreaktionszeit von 4 Stunden wurden die nicht umgesetzten Alkylenoxide unter vermindertem Druck (10 mbar) abdestilliert.

*Polyether-polyol 4:*

In einem 5 *l* Rührautoklav wurde eine Mischung aus 410 g Saccharose, 73,6 g Glycerin, 25 g Wasser und 4,2 g 85gew.%ige wässrige Kalilauge vorgelegt und danach bei 115°C unter Rühren 1150 g 1,2-Propylenoxid so hinzugefügt, dass der Gesamtdruck im Rührautoklav 7 bar nicht überschritt. Nach Beendigung der Propoxilierung wurde das nicht umgesetzte 1,2-Propylenoxid unter vermindertem Druck (10 mbar) abdestilliert.

*Polyether-polyol 5:*

In einem 5 *l* Rührautoklav wurden 520 g einer 70gew.%igen wässrigen Sorbitlösung und 3 g 83-gew.%ige wässrige Kalilauge vorgelegt und danach das Wasser unter vermindertem Druck (10 mbar) bei 105°C in 4 Stunden abdestilliert. Danach wurden unter Rühren bei 105°C 850 g 1,2-Propylenoxid so hinzugefügt, dass der Gesamtdruck im Rührautoklav 7 bar nicht überschritt. Nach Abreaktion des 1,2-Propylenoxids wurden die flüchtigen Bestandteile bei 110°C in einer Stunde unter einem Druck von 10 mbar abdestilliert.

*Beispiel 1 bis 5*

Allgemeine Reinigungsvorschrift:

Zu den rohen Polyether-polyolen 1 bis 5 wurden bei 90°C unter Rühren Wasser und danach 85gew.%ige wässrige (sirupöse) Phosphorsäure hinzugefügt. Die Reaktionsmischung wurde eine Stunde bei 90°C gerührt und mit einem handelsüblichen künstlichen Magnesiumsilikat versetzt. Nach einer weiteren Rührzeit von einer Stunde wurde ein Filterhilfsmittel auf Basis von Kieselgur hinzugefügt, bei einer Temperatur von 90°C durch einen Metallfilter mit einer Maschenweite von 80 µm unter einem Druck von 4 bar filtriert und das Wasser unter einem Druck von 5 mbar abdestilliert.

Vergleichsbeispiele 1A bis 5A

Allgemeine Reinigungsvorschrift:

Zu den rohen Polyether-polyolen 1 bis 5 wurden bei 90°C unter Rühren Wasser und danach 85gew.%ige wässrige Phosphorsäure hinzugefügt. Nach einer Rührzeit von einer Stunde wurde ein Filterhilfsmittel auf Basis von Kieselgur eingerührt und analog den Angaben der Beispiele 1 bis 5 filtriert und das Wasser abdestilliert.

Vergleichsbeispiele 1B bis 5B und 1C bis 5C

Allgemeine Reinigungsvorschrift:

Zu dem auf 90°C abgekühlten rohen Polyetherpolyol wurde Wasser und anschliessend künstliches Magnesiumsilikat und ein Filterhilfsmittel (Kieselgur) unter Rühren hinzugefügt. Nach einer Rührzeit von einer Stunde bei 90°C wurde analog den Angaben der Beispiele 1 bis 5 filtriert und das Wasser unter vermindertem Druck abdestilliert.

Die eingesetzten Mengen von 85gew.%iger wässriger Phosphorsäure, künstlichem Magnesiumsilikat, Kieselgur und Wasser und die erhaltenen Analysendaten, die Filtrationsgeschwindigkeit und die Menge an Filterrückstand sind in der folgenden Tabelle zusammengefasst.

Die Ergebnisse zeigen, dass die Polyether-polyoleigenschaften pH-Wert und Natrium- und Kaliumionengehalt, die Filtrationsgeschwindigkeit und geringer Filterrückstand verbunden mit hoher Polyetherpolyolausbeute nur nach dem erfindungsgemässen Verfahren optimal aufeinander abgestimmt werden.

Tabelle

| Beispiel | 1 | | | | 2 | | | |
| Vergleichsbeispiele | | 1A | 1B | 1C | | 2A | 2B | 2C |
| --- | --- | --- | --- | --- | --- | --- | --- | --- |
| rohes Polyether-polyol: | 1 | 1 | 1 | 1 | 2 | 2 | 2 | 2 |
| 85gew.%ige wässrige Phosphorsäure [g/kg rohem Polyetherpolyol] | 5,67 | 5,67 | — | — | 10,3 | 10,3 | — | — |
| »     [Mol/Mol KOH] | 1 | 1 | — | — | 1,0 | 1,0 | — | — |
| künstliches Magnesiumsilikat [Gew.-%] | 0,2 | — | 0,2 | 2,0 | 0,2 | — | 0,2 | 2,0 |
| Filterhilfsmittel [Gew.-%] (Kieselgur) | 0,2 | 0,2 | 0,2 | 0,2 | 0,2 | 0,2 | 0,2 | 0,2 |
| Wasser [Gew.-%] | 1,0 | 1,0 | 1,0 | 1,0 | 0,5 | 0,5 | 0,5 | 0,5 |
| reines Polyether-polyol: | | | | | | | | |
| Hydroxyzahl | 26 | 26 | 27 | 26 | 35 | 35 | 35 | 35 |
| Säurezahl | 0,05 | 0,11 | — | 0,05 | 0,05 | — | 0 | 0,03 |
| primäre Hydroxylgruppen [%] | 82 | 83 | 82 | 82 | 80 | 80 | 81 | 79 |
| pH-Wert | 6,85 | 10,35 | 11,41 | 7,38 | 6,74 | — | 12,32 | 7,36 |
| Natrium-/Kaliumionengehalt [ppm] | 1/1 | 7/510 | 5/420 | 5/15 | 1/1 | 9/165 | 15/1300 | 1/21 |
| Filtrationsgeschwindigkeit [g/min] | 41 | 140 | 148 | 15,5 | 30 | 0,08 | 96 | 22 |
| Filterrückstand [Gew.-%] | 2,1 | 1,12 | 1,01 | 3,5 | 1,9 | — | 1,03 | 4,6 |

Tabelle

| Beispiel / Vergleichsbeispiele | 3 | 3A | 3B | 3C | 4 | 4A | 4B | 4C | 5 | 5A | 5B | 5C |
|---|---|---|---|---|---|---|---|---|---|---|---|---|
| rohes Polyetherpolyol: | 3 | 3 | 3 | 3 | 4 | 4 | 4 | 4 | 5 | 5 | 5 | 5 |
| 85gew.%ige wässrige Phosphorsäure [g/kg rohem Polyether-polyol] | 4,54 | 4,54 | — | — | 1,45 | 1,45 | — | — | 1,72 | 1,72 | — | — |
| 85gew.%ige wässrige Phosphorsäure [Mol/Mol KOH] | 1 | 1 | — | — | 0,33 | 0,33 | — | — | 0,33 | 0,33 | — | — |
| Magnesiumsilikat [Gew.-%] | 0,2 | — | 0,2 | 1,7 | 0,2 | — | 0,2 | 2,0 | 0,2 | — | 0,2 | 2,0 |
| Filterhilfsmittel [Gew.-%] (Kieselgur) | 0,2 | 0,2 | 0,2 | 0,2 | 0,1 | 0,1 | 0,2 | 0,2 | 0,2 | 0,2 | 0,2 | 0,2 |
| Wasser [Gew.-%] | 1,0 | 1,0 | 1,0 | 1,0 | 0,5 | 0,5 | 0,5 | 0,5 | 1,0 | 1,0 | 1,0 | 1,0 |
| reines Polyetherpolyol: | | | | | | | | | | | | |
| Hydroxylzahl | 42 | 42 | 41 | 42 | 400 | 398 | 400 | 400 | 490 | 485 | 485 | 490 |
| Säurezahl | 0,07 | 0,28 | 0,01 | 0,07 | 0,02 | 0,04 | 0 | 0,01 | 0,04 | 0,02 | 0 | 0,02 |
| pH-Wert | 6,5 | 5,81 | 9,37 | 7,05 | 7,06 | 11,1 | 11,48 | 8,5 | 7,3 | 8,03 | 10,83 | 8,12 |
| Natrium-/Kaliumionengehalt [ppm] | 1/1 | 2/19 | 2/180 | 3/4 | 1/54 | 6/695 | 3/545 | 1/60 | 3/48 | 3/173 | 12/450 | 13/5 |
| Filtrationsgeschwindigkeit [g/min] | 250 | 317 | 98 | 45 | 100 | 50 | 143 | 14 | 31 | 38 | 96 | 20 |
| Filterrückstand [Gew.-%] | 1,6 | 1,6 | 1,0 | 3,5 | 1,2 | 1,2 | 0,93 | 3,5 | 1,0 | 0,9 | 1,0 | 4,0 |

## Patentansprüche

1. Verfahren zur Reinigung von rohen Polyetherpolyolen, die durch anionische Polymerisation von Alkylenoxiden in Gegenwart von basischen Katalysatoren und anschliessender Neutralisation der Katalysatoren mit Mineralsäure erhalten werden, dadurch gekennzeichnet, dass man

a) das rohe Polyether-polyol mit 0,2 bis 1,5 Gew.-Teilen Wasser pro 100 Gew.-Teilen rohes Polyether-polyol und 0,3 bis 1,1 Molen ortho-Phosphorsäure pro Mol basischen Katalysator mischt,

b) der Reaktionsmischung danach 0,05 bis 0,5 Gew.-Teile eines Adsorptionsmittels pro 100 Gew.-Teilen rohes Polyether-polyol einverleibt,

c) die gebildeten Salze und festen Zusatzstoffe abtrennt und

d) das Wasser aus dem Polyether-polyol abdestilliert.

2. Verfahren nach Anspruch 1, dadurch gekennzeichnet, dass man das rohe Polyether-polyol bei Temperaturen von 50 bis 140°C und gegebenenfalls unter erhöhtem Druck mit Wasser und Phosphorsäure mischt.

3. Verfahren nach Anspruch 1, dadurch gekennzeichnet, dass man die Reaktionsmischung aus Polyether-polyol, Wasser und Phosphorsäure bei Temperaturen von 50 bis 140°C 0,1 bis 4 Stunden rührt und danach das Adsorptionsmittel einverleibt.

4. Verfahren nach Anspruch 1, dadurch gekennzeichnet, dass man als Adsorptionsmittel ein Magnesiumsilikat verwendet.

5. Verfahren nach Anspruch 1, dadurch gekennzeichnet, dass man die gebildeten Salze und einverleibten festen Zusatzstoffe durch Filtration abtrennt.

6. Verfahren nach Ansprüchen 1 und 5, dadurch gekennzeichnet, dass man die Filtration in Gegenwart eines Filterhilfsmittels durchführt.

7. Verfahren nach Anspruch 1, dadurch gekennzeichnet, dass man zur Polymerisation gegebenenfalls substituente Alkylenoxide mit 2 bis 4 Kohlenstoffatomen im Alkylenrest verwendet.

8. Verfahren nach Anspruch 1, dadurch gekennzeichnet, dass man als Alkylenoxide Ethylenoxid und/oder 1,2-Propylenoxid verwendet.

9. Verfahren nach Anspruch 1, dadurch gekennzeichnet, dass man als basische Katalysatoren Alkalihydroxide verwendet.

## Claims

1. A process for the purification of crude polyether polyols prepared by anionic polymerization of alkylene oxides in the presence of basic catalysts and subsequent neutralization of the catalysts with a mineral acid, wherein
a) the crude polyether polyol is mixed with 0.2 to 1.5 parts by weight of water per 100 parts by weight of crude polyether polyol, and 0.3 to 1.1 moles of ortho-phosphoric acid per mole of basic catalyst,
b) 0.05 to 0.5 part by weight of an adsorbent per 100 parts by weight of crude polyether polyol is subsequently incorporated into the reaction mixture,
c) the resulting salts and solid additives are separated off, and
d) the water is removed from the polyether polyol by distillation.

2. A process as claimed in claim 1, wherein the crude polyether polyol is mixed with water and phosphoric acid at temperatures of from 50° to 140°C and, if desired, under elevated pressure.

3. A process as claimed in claim 1, wherein the reaction mixture of polyether polyol, water and phosphoric acid is stirred at temperatures of from 50° to 140°C for 0.1 to 4 hours, and the adsorbent is subsequently incorporated into the reaction mixture.

4. A process as claimed in claim 1, wherein a magnesium silicate is used as the adsorbent.

5. A process as claimed in claim 1, wherein the salts formed and incorporated solid additives are separated off by filtration.

6. A process as claimed in claims 1 and 5, wherein filtration is carried out in the presence of a filtering aid.

7. A process as claimed in claim 1, wherein optionally substituted alkylene oxides, where alkylene is of 2 to 4 carbon atoms, are used in the polymerization.

8. A process as claimed in claim 1, wherein ethylene oxide and/or 1,2-propylene oxide are used as alkylene oxides.

9. A process as claimed in claim 1, wherein alkali metal hydroxides are used as basic catalysts.

## Revendications

1. Procédé d'épuration de polyéthers-polyols bruts qui sont obtenus par polymérisation anionique d'oxydes d'alkylène en présence de catalyseurs basiques, puis neutralisation suivante des catalyseurs avec des acides minéraux, caractérisé par le fait que
a) on mélange le polyéther-polyol brut avec 0,2 à 1,5 partie en poids d'eau pour 100 parties en poids de polyéther-polyol brut et 0,3 à 1,1 mole d'acide ortho-phosphorique par mole de catalyseur basique,
b) on incorpore ensuite au mélange de réaction 0,05 à 0,5 partie en poids d'un agent d'adsorption pour 100 parties en poids de polyéther-polyol brut
c) on sépare le sel formé et les additifs solides
d) on sépare par distillation l'eau du polyéther-polyol.

2. Procédé selon la revendication 1, caractérisé par le fait que l'on mélange le polyéther-polyol brut avec l'eau et l'acide phosphorique à des températures de 50 à 140°C et éventuellement sous pression élevée.

3. Procédé selon la revendication 1, caractérisé par le fait que l'on agite le mélange de réaction de polyéther-polyol, eau et acide phosphorique à des températures de 50 à 140°C pendant 0,1 à 4 heures, puis on y incorpore l'agent d'adsorption.

4. Procédé selon la revendication 1, caractérisé par le fait que l'on utilise, comme agent d'adsorption, un silicate de magnésium.

5. Procédé selon la revendication 1, caractérisé par le fait que l'on sépare par filtration le sel formé et les additifs solides incorporés.

6. Procédé selon les revendications 1 et 5, caractérisé par le fait que l'on effectue la filtration en présence d'un auxiliaire de filtrage.

7. Procédé selon la revendication 1, caractérisé par le fait que l'on utilise pour la polymérisation des oxydes d'alkylène, éventuellement substitués, ayant 2 à 4 atomes de carbone dans le reste alkylène.

8. Procédé selon la revendication 1, caractérisé par le fait que l'on utilise, comme oxydes d'alkylène, de l'oxyde d'éthylène et/ou 1,2-propylène-oxyde.

9. Procédé selon la revendication 1, caractérisé par le fait que l'on utilise, comme catalyseurs basiques, des hydroxydes alcalins.